# EUROPEAN PATENT APPLICATION

(11) **EP 3 737 135 A1**
(43) Date of publication of application: **11.11.2020**
(21) Application number: 18898429.8
(22) Date of filing: 09.11.2018
(51) Int. Cl.: H04W 12/12

(54) **METHOD AND DEVICE FOR DISCOVERING NUISANCE CALL IN VOLTE**

(30) Priority: 02.01.2018 CN 201810001182
(71) Applicant: ZTE Corporation, shenzhen Guangdong 518057 (CN)
(72) Inventor: REN, Guohua, Shenzhen, Guangdong 518057 (CN); GONG, Dehua, Shenzhen, Guangdong 518057 (CN); TONG, Jinsong, Shenzhen, Guangdong 518057 (CN)
(74) Representative: Iannone, Carlo Luigi
(86) International application number: PCT/CN2018/114859
(87) International publication number: WO 2019/134441

(57) **Abstract**

Provided is a method for discovering a nuisance call in a VoLTE network. The method includes steps described below. A network management system receives (S101) call information extracted from the VoLTE network and transmitted in real-time by a CSCF network element according to a monitoring strategy; and the network management system filters (S102) the call information according to a nuisance call filtering rule to obtain a nuisance call number.

## Description

### TECHNICAL FIELD

The present disclosure relates to, but is not limited to, the field of communications and, in particular, to a method and device for discovering a nuisance call in a voice over long term evolution (VoLTE) network.

### BACKGROUND

An Internet protocol multimedia subsystem (IMS) is a development direction of multimedia communications, and it is also an important component of the fourth generation (4G) mobile communication system network. The IMS is a subsystem supporting Internet protocol (IP) multimedia services and proposed by the third generation partnership project (3GPP).

VoLTE based on the IMS is an accepted general development direction of the 3GPP for long term evolution (LTE) network voice solutions.

With rapid developments of the 4G network, more and more users of the second generation (2G) mobile communication system and the third generation (3G) mobile communication system migrate to the 4G network, and nuisance calls in the 4G network have an increasing number, so it is necessary to deploy a nuisance call identification system in the 4G network. The VoLTE serves as a voice solution for the 4G network, so the nuisance call identification system may be deployed in the VoLTE system. Methods for identifying a nuisance call generally include: one is that call historical data is analyzed to extract call information of a user within a period of time, and suspected nuisance numbers are screened out through a certain rule; another is that telephone bill information is analyzed to screen out suspected nuisance call numbers from an ultra-short telephone bill.

The above mentioned methods are unable to quickly and timely discover a nuisance call.

### SUMMARY

Embodiments of the present disclosure provides a method and device for discovering a nuisance call in a VoLTE network, which can timely and accurately discover a nuisance call.

An embodiment of the present disclosure provides a method for discovering a nuisance call in a VoLTE network. The method includes steps described below. A network management system receives call information extracted from the voice over long term evolution (VoLTE) network and transmitted in real time by a call session control function (CSCF) network element according to a monitoring strategy. And the network management system filters the call information according to a nuisance call filtering rule to obtain a nuisance call number.

An embodiment of the present disclosure further provides a device for discovering a nuisance call in a VoLTE network. The device includes a call information receiving module and a call information filtering module. The call information receiving module is configured to receive call information extracted from the voice over long term evolution (VoLTE) network and transmitted in real time by a call session control function (CSCF) network element according to a monitoring strategy. The call information filtering module is configured to filter the call information according to a nuisance call filtering rule to obtain a nuisance call number.

An embodiment of the present disclosure further provides a computer-readable storage medium, which is configured to store computer-executable instructions for implementing the above-mentioned method for discovering the nuisance call in the VoLTE network when executed.

### BRIEF DESCRIPTION OF DRAWINGS

FIG. 1 is a block diagram of a method for discovering a nuisance call in a VoLTE network according to an embodiment of the present disclosure;
FIG. 2 is a block diagram of a device for discovering a nuisance call in a VoLTE network according to an embodiment of the present disclosure;
FIG. 3 is a diagram of configuring a monitoring strategy according to an embodiment of the present disclosure;
FIG. 4 is a diagram of configuring a filtering rule according to an embodiment of the present disclosure; and
FIG. 5 is a flowchart of discovering a nuisance call number in a calling process according to an embodiment of the present disclosure.

### DETAILED DESCRIPTION

The embodiments of the present disclosure will be described hereinafter in conjunction with the drawings.

For identifying a nuisance call, 1). when it is performed by analyzing historical data, nuisance calls cannot be discovered quickly and timely; 2). when it is performed by extracting call information within a period of time, which will cause nuisance calls which did not call within the period of time unable to be discovered; 3). extraction of the historical data has no pertinence, no strategy is set in advance, and the data is numerous and jumbled, which makes a very large workload of data analysis; and 4). when it is performed by analyzing a telephone bill, nuisance calls such as hanged up calls, rejected calls, or unconnected calls, which do not generate telephone bills, cannot be discovered.

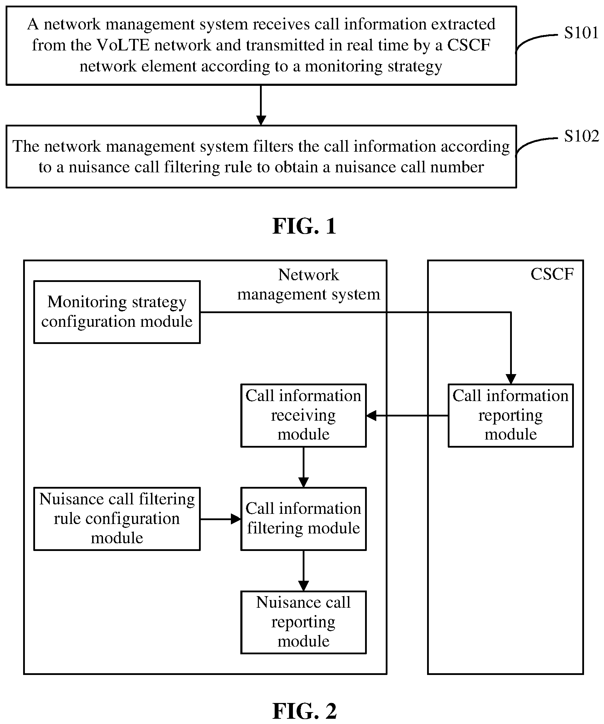

FIG. 1 is a block diagram of a method for discovering a nuisance call in a VoLTE network according to an embodiment of the present disclosure. As shown in FIG. 1, the method may include steps described below.

In step S101, a network management system receives call information extracted from the VoLTE network and transmitted in real time by a CSCF network element according to a monitoring strategy.

The monitoring strategy may be pre-configured.

Optionally, before the network management system receives the call information extracted from the VoLTE network and transmitted in real time by the CSCF network element according to the monitoring strategy, the method further includes a step described below. The monitoring strategy is configured. The step in which the monitoring strategy is configured may include that the network management system transmits a monitoring strategy configuration request carrying monitoring strategy configuration data to the CSCF network element, so that the CSCF network element configures the monitoring strategy by utilizing the monitoring strategy configuration data.

The monitoring strategy may be flexibly configure, which may include, but is not limited to, at least one of: monitoring all calls in the VoLTE network, monitoring calls occurring on each of one or more access apparatuses, monitoring calls occurring on each IP address of one or more IP addresses, monitoring calls occurring on a designated user number segment, or monitoring calls occurring at a designated user domain name. In this way, optionally, the step in which the CSCF network element extracts the call information from the VoLTE network in real time according to the monitoring strategy includes a step described below. The CSCF network element may monitor calls occurring in the VoLTE network in real time according to the monitoring strategy, and if a call conforming to the monitoring strategy is monitored, call information of the call may be extracted, and the call information may include a calling number, a called number, a call duration and a call failure reason.

In step S102, the network management system filters the call information according to a nuisance call filtering rule to obtain a nuisance call number.

The nuisance call filtering rule may be pre-configured.

Optionally, before the network management system filters the call information to obtain the nuisance call number according to the nuisance call filtering rule, the method further includes a step described below. The nuisance call filtering rule is configured. The step in which the nuisance call filtering rule is configured may include that the network management system acquires filtering rule configuration data from a received filtering rule configuration request initiated by a maintenance terminal, and configures the nuisance call filtering rule by utilizing the filtering rule configuration data. The nuisance call filtering rule may be flexibly adjusted according to characteristics of practical nuisance calls, and it may include, but is not limited to, at least one of: filtering a calling number having a calling frequency greater than a preset calling frequency (that is, a calling number frequently calls out in a short period of time), filtering a calling number having a calling time less than preset time and a number of calls greater than a preset number of calls (that is, the calling number has a large number of ultra-short calls), filtering a calling number having a rejection number or a hang-up number greater than a preset rejection number or a hang-up number (that is, as a calling number, a large number of calls are rejected or hung up by called users), or filtering a calling number having dispersion of called numbers greater than preset dispersion (that is, as a calling number, called numbers have high dispersion). When it is implemented, two or more filtering rules may be selected to use.

After the configuration of the nuisance call filtering rule is completed, step S102 may be implemented. Step S102 may include steps described below. The network management system classifies received call information according to calling numbers to obtain call information of each calling number. The network management system filters the call information of each calling number according to the nuisance call filtering rule to obtain a calling number conforming to the nuisance call filtering rule, and determines the calling number conforming to the nuisance call filtering rule as the nuisance call number.

In this embodiment of the present disclosure, the monitoring strategy is configured in the VoLTE network, call information of a user is extracted in real time, and call information data is comprehensively analyzed according to the established nuisance call filtering rule, so as to screen out and identify the nuisance call number.

In this embodiment of the present disclosure, automatic monitoring and screening replaces manual data analysis and screening, so the nuisance call number can be timely and accurately discovered, thereby saving analysis time and improving efficiency of analysis and screening.

It will be understood by those skilled in the art that all or part of the steps in the methods of the above embodiments may be implemented by related hardware instructed by programs, and these programs may be stored in a computer-readable storage medium. The storage medium may include a read-only memory (ROM)/random access memory (RAM), a magnetic disk, an optical disk and a U disk.

FIG. 2 is a block diagram of a device for discovering a nuisance call in a VoLTE network according to an embodiment of the present disclosure. As shown in FIG. 2, the device may include a call information receiving module and a call information filtering module.

The call information receiving module is configured to receive call information extracted from a VoLTE network and transmitted in real time by a CSCF network element according to a monitoring strategy.

The call information filtering module is configured to filter the call information according to a nuisance call filtering rule to obtain a nuisance call number.

The device may further include a monitoring strategy configuration module.

The monitoring strategy configuration module is configured to transmit, before receiving the call information extracted from the VoLTE network and transmitted in real time by the CSCF network element according to the monitoring strategy, a monitoring strategy configuration request carrying monitoring strategy configuration data to the CSCF network element, such that the CSCF network element configures the monitoring strategy by utilizing the monitoring strategy configuration data.

The device may further include a nuisance call filtering rule configuration module.

The nuisance call filtering rule configuration module is configured to: acquire, before filtering the call information according to the nuisance call filtering rule to obtain the nuisance call number, filtering rule configuration data from a received filtering rule configuration request initiated by a maintenance terminal, and configure the nuisance call filtering rule by utilizing the filtering rule configuration data.

The device may further include a nuisance call reporting module.

The nuisance call reporting module is configured to generate a nuisance call report containing nuisance call numbers and an analysis report containing reasons for being included in the nuisance call report.

The call information receiving module, the call information filtering module, the monitoring strategy configuration module, the nuisance call filtering rule configuration module and the nuisance call reporting module may all be disposed on the network management system.

In addition, the device may further include a call information reporting module.

The call information reporting module is configured to extract the call information in the VoLTE network in real time according to a monitoring rule, and transmit the extracted call information to the call information receiving module.

The call information reporting module may be disposed on the CSCF network element.

In summary, in this embodiment of the present disclosure, the call information of users in the VoLTE network is extracted in real time, the monitoring strategy is configured, the nuisance call filtering rule is established and call information data is comprehensively analyzed, so as to screen out and identify the nuisance call number. This embodiment of the present disclosure includes steps described below.
1. The call information reporting module is deployed on the call session control function (CSCF) network element in the IMS network. The call information reporting module may extract call information of users in the VoLTE network in real time when users call, and report the call information to the call information receiving module in the network management system. The call information includes calling user information, called user information, call duration information, call failure reasons, charging information and other information that needs to be acquired.
2. The monitoring strategy configuration module is deployed on the network management system in the IMS network. The monitoring strategy configuration module may configure the monitoring strategy. And the monitoring strategy includes: monitoring calls occurring on a certain access apparatus, such as calls on a VoLTE session border controller (SBC) apparatus; monitoring calls occurring on a certain IP address; monitoring calls occurring on a designated user number segment; or monitoring calls occurring at a designated user domain name and the like.
3. The nuisance call filtering rule configuration module is deployed on the network management system in the IMS network. The nuisance call filtering rule configuration module may configure the filtering rule. And the filtering rule includes: a number as a calling number frequently calls out in a short period of time; a large number of ultra-short calls exists; a number as a calling number has a very high dispersion of called numbers; and a number as a calling number has a large number of calls rejected or hung up by called users and the like.
4. The call information filtering module is deployed on the network management system in the IMS network. The call information filtering module may perform corresponding filtering on the calling information according to the configured filtering rule to screen out qualified user numbers.
5. The call information receiving module is deployed on the network management system in the IMS network. The call information receiving module receives and stores the call information reported from the CSCF network element, and provides it to the network management for analysis according to the configured rule.
6. The nuisance call reporting module is deployed on the network management system in the IMS network. The nuisance call reporting module filters phone numbers conforming to the configured rule according to the filtering rule, and generates a nuisance call report and an analysis report illustrating reasons for being included in a nuisance call list.

To illustrate the deployment and operation of the embodiment of the present disclosure in the VoLTE network, the drawings described in the technical implementations of the present disclosure will be briefly described below. The drawings described in the following description are merely some optional embodiments of the present disclosure, and those skilled in the art may obtain drawings in other special or abnormal scene based on the provided drawings on the premise that no creative work is done.

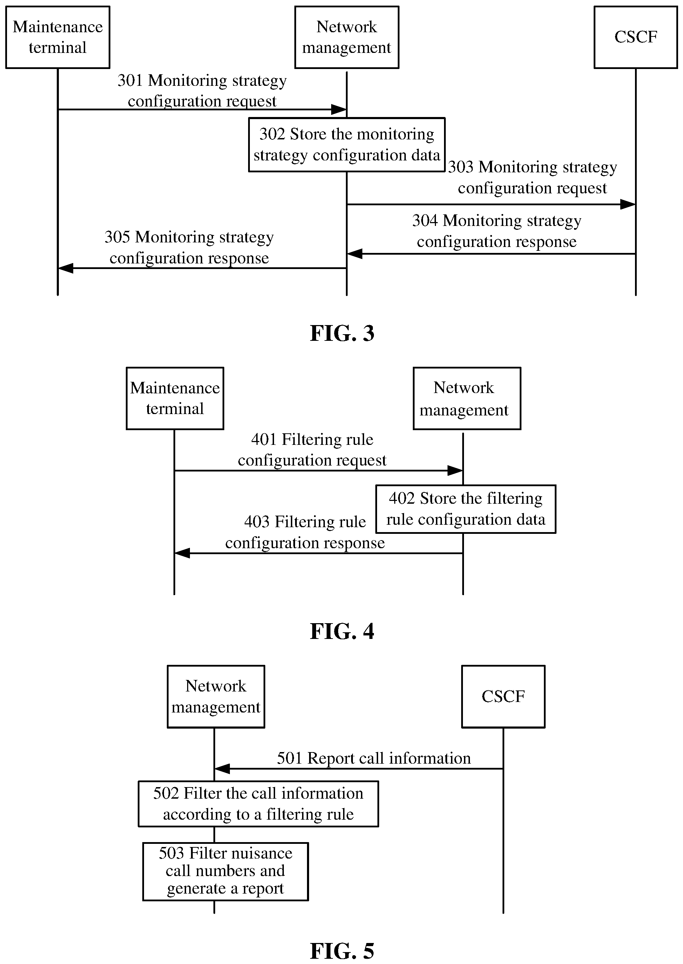

FIG. 3 is a diagram of configuring a monitoring strategy according to an embodiment of the present disclosure. As shown in FIG. 3, a method and process for configuring the monitoring strategy may include steps described below.

In 301, a maintenance terminal transmits a monitoring strategy configuration request carrying monitoring strategy configuration data to a network management system. In this way, operation and maintenance personnel may perform a monitoring strategy configuration through the maintenance terminal.

In 302, the network management system stores the monitoring strategy configuration data carried in the monitoring strategy configuration request.

In 303, the network management system transmits the monitoring strategy configuration data to a CSCF network element.

In 304, the CSCF network element returns a response massage (a monitoring strategy configuration response) to the network management system.

In 305, the network management system responds the response message to the maintenance terminal and displays related configuration data information.

The operation and maintenance personnel may configure the monitoring strategy by the maintenance terminal, and transmit the monitoring strategy configuration request carrying the monitoring strategy configuration data to the network management system. The network management system may acquire the monitoring strategy configuration data from the received monitoring strategy configuration request, store the monitoring strategy configuration data and transmit the monitoring strategy configuration request carrying the monitoring strategy configuration data to the CSCF network element. The CSCF network element may acquire the monitoring strategy configuration data from the received monitoring strategy configuration request, store the monitoring strategy configuration data, transmit the monitoring strategy configuration response to the maintenance terminal via the network management system, and notify the network management system and the maintenance terminal of a result of configuring the monitoring strategy.

FIG. 4 is a diagram of configuring a filtering rule according to an embodiment of the present disclosure. As shown in FIG. 4, a method and process for configuring the filtering rule may include steps described below.

In 401, a maintenance terminal transmits a filtering rule configuration request carrying filtering rule configuration data to a network management system. In this way, operation and maintenance personnel may perform a filtering rule configuration through the maintenance terminal.

In 402, the network management system stores the filtering rule configuration data carried in the filtering rule configuration request.

In 403, the network management system responds a response message to the maintenance terminal and displays related configuration data information.

The operation and maintenance personnel may configure the nuisance call filtering rule by the maintenance terminal, and transmit the filtering rule configuration request carrying the filtering rule configuration data to the network management system. The network management system may acquire the filtering rule configuration data from the received filtering rule configuration request, store the filtering rule configuration data, transmit the filtering rule configuration response to the maintenance terminal, and notify a result of configuring the nuisance call filtering rule to the network management system.

FIG. 5 is a flowchart of discovering a nuisance call number in a calling process according to an embodiment of the present disclosure. As shown in FIG. 5, a process of discovering the nuisance call number in the calling process may include steps described below.

In 501, a CSCF network element reports call information.

In 502, a network management system filters the reported call information according to a filtering rule.

In 503, the network management system filters nuisance call numbers and generates a report.

The CSCF network element may extract, according to the monitoring strategy configured in the embodiment of FIG. 3, the call information in the VoLTE network in real time when the users are calling, and report the extracted call information to the network management system. The network management system may filter the call information reported by the CSCF network element according to the nuisance call filtering rule configured in the embodiment of FIG. 4 to obtain a nuisance user number.

The above description is only a representative portion of the technical embodiments of the present disclosure, not all of the embodiments. Based on the technical embodiments of the present disclosure, all other technical embodiments obtained by those skilled in the art without creative work are within the protection scope of the present disclosure.

In summary, the embodiments of the present disclosure have technical effects described below.
1. In the embodiments of the present disclosure, the call information reporting module is added into the CSCF network element in the VoLTE network, the monitoring strategy configuration module, the nuisance call filtering rule configuration module, the call information receiving module, the call information filtering module and the nuisance call reporting module are added into the network management system. Compared with some situations, the embodiments of the present disclosure achieve a progress in which automatic monitoring and screening replaces manual data analysis and screening, the effect of timely and accurately discovering a nuisance call number is realized, thereby saving analysis time and improving efficiency of analysis and screening.
2. In the embodiments of the present disclosure, the filtering rule may be configured and updated timely according to changing situations of characteristics of nuisance calls in reality, so that the filtering rule has great flexibility and expandability.
3. In the embodiment of the present disclosure, the monitoring strategy may be configured, and all calls in the network or calls in particular areas, at particular number segments and on particular access apparatuses may be flexibly monitored, which has great flexibility and pertinence.

An embodiment of the present disclosure further provides a computer-readable storage medium, which is configured to store computer-executable instructions for implementing the above-mentioned method for discovering the nuisance call in the VoLTE network when the instructions are executed.

In the embodiments of the present disclosure, automatic monitoring and screening replaces manual data analysis and screening, so the nuisance call numbers can be discovered timely and accurately, thereby saving analysis time and improving efficiency of analysis and screening.

It will be understood by those of ordinary skill in the art that functional modules/units in all or part of the steps of the method, the system and the device disclosed above may be implemented as software, firmware, hardware and appropriate combinations thereof. In the hardware implementation, the division of the functional modules/units mentioned in the above description may not correspond to the division of physical components. For example, one physical component may have several functions, or one function or step may be implemented jointly by several physical components. Some or all components may be implemented as software executed by processors such as digital signal processors or microcontrollers, hardware, or integrated circuits such as application specific integrated circuits. Such software may be distributed on a computer-readable medium, which may include a computer storage medium (or a non-transitory medium) and a communication medium (or a transitory medium). As it is known to those of ordinary skill in the art, the term, computer storage medium, includes volatile and nonvolatile, removable and non-removable media implemented in any method or technology for storing information (such as computer-readable instructions, data structures, program modules or other data). The computer-storage medium includes, but is not limited to, a random access memory (RAM), a read-only memory (ROM), an electrically erasable programmable read-only memory (EEPROM), a flash memory, or other memory technologies, a compact disc read-only memory (CD-ROM), a digital versatile disc (DVD) or another optical disc storage, a magnetic cassette, a magnetic tape, a disk storage or another magnetic storage apparatus, or any other medium used to store the desired information and accessible by a computer. In addition, as it is known to those of ordinary skill in the art, the communication medium generally includes computer-readable instructions, data structures, program modules or other data in modulated data signals such as data signals modulated by carriers or data signals modulated by other transmission mechanisms, and may include any information delivery medium.

It will be understood by those of ordinary skill in the art that the technical schemes of the present disclosure may be modified or substituted equivalently without departing from the spirit and scope of the technical solutions of the present disclosure and such modifications and equivalent substitutions should fall within the scope of the claims of the present disclosure.

## Claims

1. A method for discovering a nuisance call in a voice over long term evolution, VoLTE, network, comprising:
receiving, by a network management system, call information extracted from the VoLTE network and transmitted in real time by a call session control function, CSCF, network element according to a monitoring strategy; and
filtering, by the network management system, the call information according to a nuisance call filtering rule to obtain a nuisance call number.

2. The method of claim 1, wherein before receiving, by the network management system, the call information extracted from the VoLTE network and transmitted in real time by the CSCF network element according to the monitoring strategy, the method further comprises:
configuring the monitoring strategy, wherein configuring the monitoring strategy comprises:
transmitting, by the network management system, a monitoring strategy configuration request carrying monitoring strategy configuration data to the CSCF network element, such that the CSCF network element configures the monitoring strategy by utilizing the monitoring strategy configuration data.

3. The method of claim 1 or 2, wherein the monitoring strategy comprises at least one of: monitoring all calls in the VoLTE network, monitoring calls occurring on each access apparatus of at least one access apparatus, monitoring calls occurring on each Internet protocol, IP, address of at least one IP address, monitoring calls occurring on a designated user number segment, or monitoring calls occurring at a designated user domain name.

4. The method of claim 3, wherein extracting, by the CSCF network element in real time, the call information from the VoLTE network according to the monitoring strategy comprises:
monitoring, by the CSCF network element in real time, calls occurring in the VoLTE network according to the monitoring strategy, and in a case where a call conforming to the monitoring strategy is monitored, extracting call information of the call, wherein the call information comprises a calling number, a called number, a call duration and a call failure reason.

5. The method of any one of claims 1 to 4, wherein before filtering, by the network management system, the call information according to the nuisance call filtering rule to obtain the nuisance call number, the method further comprises: configuring the nuisance call filtering rule, wherein configuring the nuisance call filtering rule comprises:
acquiring, by the network management system, filtering rule configuration data from a received filtering rule configuration request initiated by a maintenance terminal, and
configuring the nuisance call filtering rule by utilizing the filtering rule configuration data.

6. The method of any one of claims 1 to 5, wherein the nuisance call filtering rule comprises at least one of: filtering a calling number having a calling frequency greater than a preset calling frequency, filtering a calling number having a calling time less than a preset time and a number of calls greater than a preset number of calls, filtering a calling number having a refusing number or a hanging number greater than a preset refusing number or a preset hanging number, or filtering a calling number having dispersion of called numbers greater than preset dispersion.

7. The method of claim 6, wherein filtering, by the network management system, the call information according to the nuisance call filtering rule to obtain the nuisance call number comprises:
classifying, by the network management system, the received call information according to calling numbers to obtain call information of each calling number; and
filtering, by the network management system, the call information of each calling number according to the nuisance call filtering rule to obtain a calling number conforming to the nuisance call filtering rule, and determining the calling number conforming to the nuisance call filtering rule as the nuisance call number.

8. A device for discovering a nuisance call in a voice over long term evolution, VoLTE, network, comprising:
a call information receiving module, configured to receive call information extracted from the VoLTE network and transmitted in real time by a call session control function, CSCF, network element according to a monitoring strategy; and
a call information filtering module, configured to filter the call information according to a nuisance call filtering rule to obtain a nuisance call number.

9. The device of claim 8, further comprising:
a monitoring strategy configuration module, configured to transmit, before receiving the call information extracted from the VoLTE network and transmitted in real time by the CSCF network element according to the monitoring strategy, a monitoring strategy configuration request carrying monitoring strategy configuration data to the CSCF network element, such that the CSCF network element configures the monitoring strategy by utilizing the monitoring strategy configuration data.

10. The device of claim 8 or 9, further comprising:
a nuisance call filtering rule configuration module, configured to: acquire, before filtering the call information according to the nuisance call filtering rule to obtain the nuisance call number, filtering rule configuration data from a received filtering rule configuration request initiated by a maintenance terminal, and configure the nuisance call filtering rule by utilizing the filtering rule configuration data.

11. A computer-readable storage medium, storing computer-executable instructions, wherein the computer-executable instructions, when executed, implement the method for discovering a nuisance call in a voice over long term evolution, VoLTE, network of any one of claims 1 to 7.
